# EUROPEAN PATENT APPLICATION

(11) **EP 2 853 865 A1**
(43) Date of publication of application: **01.04.2015**
(21) Application number: 14186423.1
(22) Date of filing: 25.09.2014
(51) Int. Cl.: G01F 13/00, B65G 33/26, B65G 65/46

(54) **Dosing apparatus**

(30) Priority: 27.09.2013 US 201314039325
(71) Applicant: Cavadistrib. Inc., Blainville, QC J7C 6A9 (CA)
(72) Inventor: Massicotte, René, Blainville, Québec J7C 6A9 (CA)
(74) Representative: Capitán García, Maria Nuria

(57) **Abstract**

A dosing apparatus for the delivery of a substance in discrete form comprises a conveying element in which the discharge end thereof is a close fit in a discharge bushing thereby to ensure that the correct dosage of substance is discharged on a consistent basis. At least a portion of the conveying element located adjacent the discharge wall has a sharp edge for an easy breaking of larger particles of the feeding substance to ensure accurate dosage.

## Description

### OBJECT OF THE INVENTION

The present invention relates to dosing apparatuses and methods, and is more particularly concerned with such an apparatus for automatically, or manually, dosing powder, or granular or other substances in discrete form.

### BACKGROUND OF THE INVENTION

It is well known in the art to provide apparatus for the delivery of such materials as mentioned above at predetermined rates, namely in prescribed dosages, in for example the chemical or pharmaceutical industries where consistent accuracy is an important requirement for their processes.

Various types of dosing apparatus have been proposed and include inter alia those employing pocketed rotors, or screw feeders in either the vertical or horizontal orientations feeding particulate substances in granular, pulverulent or generally discrete form continuously or intermittently as demanded by the relevant processes.

One of the problems attendant upon the usage of conventional apparatus is in maintaining the accuracy requirement in view of the predisposition of the driving elements to become contaminated and in so doing to affect the quantitative performance of the apparatus on a temporal basis. Accordingly, the efficacy of the apparatus is compromised, as is the process for which it is being employed. Furthermore, in order to provide accurate dosage, one must ensure that there is always feeding substance flowing through the discharge outlet, with the space between the discharge opening and the conveying element is substantially entirely filled, with no void left because of too large particle that cannot enter the space.

Accordingly, there is a need for an improved dosing apparatus.

### DESCRIPTION OF THE INVENTION

It is therefore a general object of the present invention to provide an improved dosing apparatus that solves the above-mentioned drawbacks.

An advantage of the present invention is that the dosing apparatus provides for consistency of delivery rates in the absence of any significant variation in quantity.

Another advantage of the present invention is that the dosing apparatus is simple in construction and operation.

Another advantage of the present invention is that the dosing apparatus has the capability of breaking larger particles of the feeding substance, preferably via a sharp edge, at least the last thread adjacent the output wall, of the conveying element, preferably being a drill or the like, and therefore always ensuring that there is feeding substance coming out at the discharge outlet.

A further advantage of the present invention is that the dosing apparatus has easily replaceable parts and its adjustment is facilitated thereby.

Still another advantage of the present invention is that the dosing apparatus provides for variations in the manner of dosage delivery.

Yet another advantage of the present invention is that the dosing apparatus is intended and capable of continuous operation, as 24 hours a day, 7 days a week.

According to the present invention, there is provided a dosing apparatus comprising a reservoir for a substance in discrete particulate form, the reservoir for the substance having an inlet for the introduction of the substance thereto and an outlet for the egress of the substance therefrom, a conveying element adapted to convey the substance in predetermined dosages from the reservoir to the outlet thereof for delivery therefrom, the conveying element is held within a bushing defining a seal in use adapted to allow the discharge of the predetermined dosages as aforesaid from the reservoir and to prevent the egress therefrom of any inadvertent additional substance affecting the accuracy of the dosages, a motor for driving the conveying element, and a means for programming the motor, the dosing apparatus being characterized in that the conveying element includes a sharp edge at the discharge end thereof.

Conveniently, the sharp edge extends over at least a complete thread of the conveying element adjacent the bushing of the discharge end, and typically between the two bushings. Preferably, the conveying element is a drill.

Conveniently, the sharp edge is at least partially oriented towards the outlet.

Adjustment means may be provided for the conveying element to ensure proper alignment thereof in the bushing. The adjustment means may consist of a simple slide arrangement at each end of the conveying element, suitable securement being effected as necessary.

The bushing may be of any desired configuration as may be dictated by the substance being conveyed in the predetermined dosage.

The conveying element may be in the form of an auger or worm the flight of which is a close fit in the bushing to the extent that the interaction in use of the rotating flight and the bushing seals the element to allow the delivery of only the substance conveyed by the flight of the element and to prevent the passage of any of the substance that may have adhered unintentionally to the exterior surface of the flight. Accordingly the delivery rate is maintained at an accurate predetermined level in the absence of any appreciable variation thereto. The bushing thus provides a barrier to unwanted and contaminant flow of the substance into the prescribed dosage.

The apparatus may also provide a receptacle for the dosed delivery disposed adjacent the outlet.

The delivery rate for the dosing apparatus may be selected at any level, namely by minute, by hour or daily as desired, the programming means being adapted to effect such control accordingly.

Other objects and advantages of the present invention will become apparent from a careful reading of the detailed description provided herein, with appropriate reference to the accompanying drawings.

### DESCRIPTION OF THE DRAWINGS

Further aspects and advantages of the present invention will become better understood with reference to the description in association with the following figures, wherein:
Figure 1 is a simplified front perspective view of a dosing apparatus in accordance with an embodiment of the present invention;
Figure 2 is a sectioned front perspective view of another embodiment with certain parts removed for the sake of clarity;
Figure 3 is a sectioned front elevation of the embodiment of Figure 2; and
Figure 4 is an enlarged partially broken and sectioned front elevation of another embodiment of the conveying element of Figure 2.

### PREFERRED EMBODIMENT OF THE INVENTION

With reference to the annexed drawings the preferred embodiments of the present invention will be herein described for indicative purpose and by no means as of limitation with like numerals of reference being employed for like parts in differing embodiments of the invention or its details.

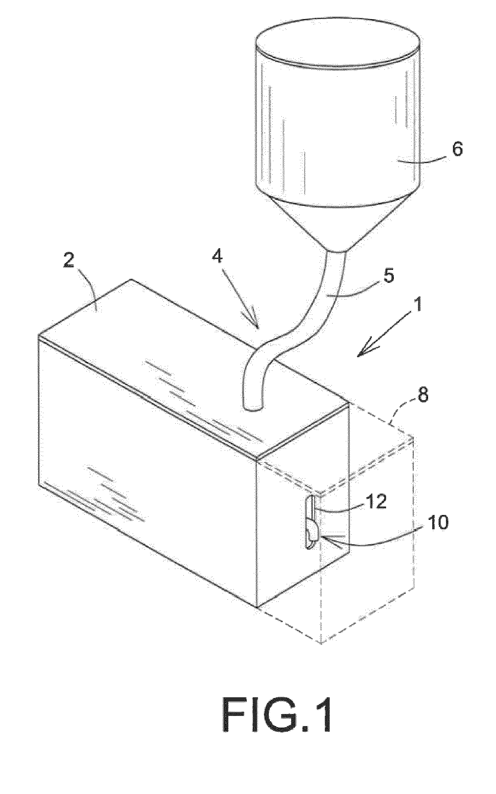

Referring first to Figure 1, there is shown an exterior view of one embodiment of dosing apparatus 1 including a housing 2 encasing a reservoir (not shown) with an inlet conduit 4 fed through a tube 5 from an elevated hopper 6. A receptacle 8 is illustrated in ghosted outline and serves to receive dosed deliveries of a substance from the reservoir, the deliveries being effected by a conveying element (not shown) which engages a bushing 10 in the outlet 12 of the reservoir.

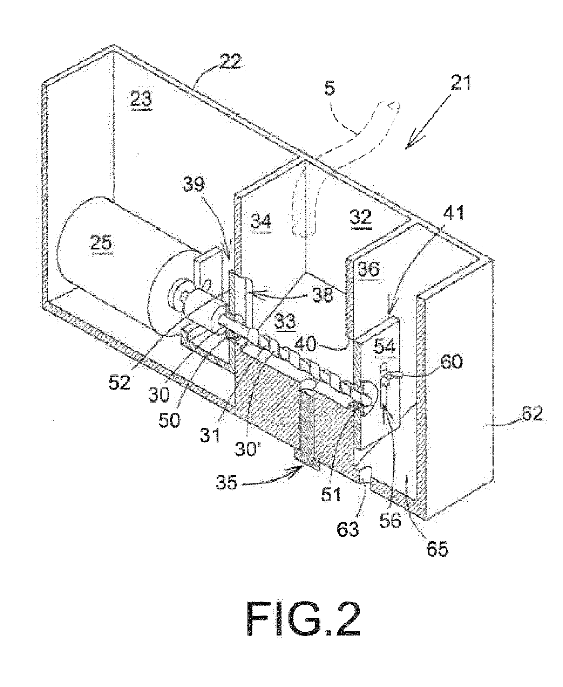

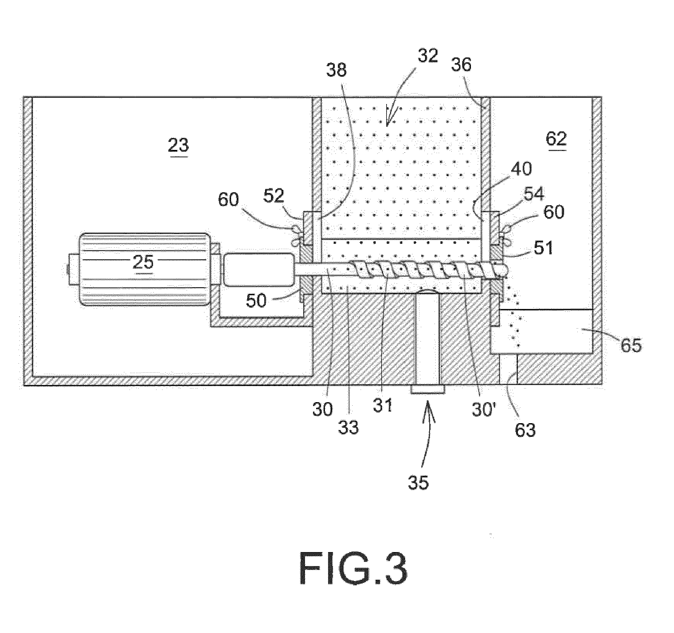

Turning now to Figures 2 and 3 a second embodiment of dosing apparatus 21 is illustrated and comprises a housing 22 defining a drive chamber 23 enclosing a motor 25 controlled in programmable fashion by a programmer (not shown), such as using a potentiometer or the like. The motor 25 is coupled to and is adapted to drive a conveying element 30, which extends through a reservoir 32 at the relatively lower end thereof adjacent its sloping base 33, which is provided with a plugged drain 35. The reservoir 32 is defined between two vertical compartmentalizing walls 34, 36 each of which is appropriately pierced as at 38, 40 respectively to provide a mounting zone 39, 41 for the conveying element 30. The conveying element 30 is held at each end thereof in a bushing 50, 51 providing a wiping seal to give a tight fit for the drive end and the discharge end of the element. The bushings 50, 51 are held in a mounting block 52, 54 respectively each of which is adjustable through the agency of a pin and slot arrangement 56 securable in position by the application of pressure provided by wing-nuts 60 or the like. A receptacle 62 for the reception in use of dosages of substance delivered by the conveying element 30 through the outlet bushing 51 is located contiguous with the reservoir 32. The receptacle 62 has a discharge outlet 63 in its sloping base 65.

The conveying element 30 is in the form of an auger 30' with a scrolled flight 31 which in use serves to move and thus convey the substance within the reservoir 32 to the outlet 12.

In operation, a substance in discrete form, for example powder or granules, is held in the hopper 6 and gravitationally feeds through the tube 5 into the reservoir 32 where the substance is supported by the sloping base 33 and between the walls 34, 36. Actuation of the motor 25 in accordance with a programmed dosing regime on a temporal basis, e.g. g/min, g/hr, is instigated with the result that the conveying element 30 rotates and in so doing its flight 31 picks up the substance and scrolls it towards the outlet bushing 51.

It will be understood by the skilled addressee that since the auger 30' lies and rotates within the body of the substance in the reservoir, the outer surface of the flight 31 is in contact with that substance and may attract particles which are carried thereby towards the outlet bushing 51. However, in view of the tight fit of the discharge end of the conveying element 30 within its bushing 51, the particles so attracted are in effect barred from entering the outlet bushing 51 and thus the predetermined dosage maintains its accuracy since it is not contaminated by inadvertent carriage of particle adhering to the outer surface of the scroll flight 31.

The substance discharged through the outlet bushing 51 descends as illustrated in Figure 3 into the receptacle 62 onto the sloping base 65 and falls through the discharge outlet 63 for predestined use in a relevant process which could be for example chemical or pharmaceutical in character.

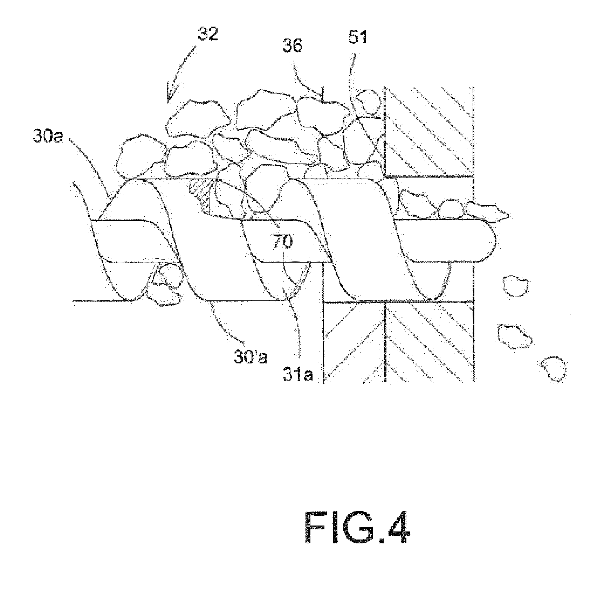

Turning now to Figure 4, there is shown another embodiment 30'a of the auger conveying element 30a, preferably a conventional drill 31a or the like, typically used when large-size particulate feeding substance is considered. At least a portion, such as a complete 360-degree thread, of the drill 31a adjacent (just before or upstream of) the outlet 12 in the vertical wall 36, or the discharge bushing 51, includes a sharp edge 70, typically at least partially oriented forward or towards the outlet 12, to easily initiate the breaking of large particles of the feeding substance (some feeding substances consist of very really hard particles) in order to ensure that the all the feeding substance can flow through the bushing 51 into the receptacle 62, without leaving any unfilled space between the drill 31a and the bushing 51. In fact, large particles get squeezed between the robust drill 31a and the adjacent vertical wall 36, or bushing 51, where they crack and break into smaller size particles to ensure continuous flowing of the substance and therefore accurate dosing, as shown in Figure 4.

In an alternative application the dosing apparatus could be deployed for the controlled feeding of animals and such application may be particularly useful for intensive farming, where regular and closely monitored and accurate feeding of the animals is necessary. The programming of the motor operation may not only dictate the volume of the feed, but also the duration and number of times the motor is actuated.

Although the present invention of a dosing apparatus has been described with a certain degree of particularity, it is to be understood that the disclosure has been made by way of example only and that the present invention is not limited to the features of the embodiments described and illustrated herein, but includes all variations and modifications within the scope of the invention as hereinafter claimed.

## Claims

1. A dosing apparatus comprising a reservoir for a substance in discrete particulate form, the reservoir for the substance having an inlet for the introduction of the substance thereto and an outlet for the egress of the substance therefrom, a conveying element having an inlet end and a discharge end, each end being mounted in a respective bushing and the conveying element extending through the reservoir and adapted to convey the substance in predetermined dosages from the reservoir to the outlet thereof for delivery therefrom, wherein the conveying element is held within the respective bushing, the bushing for said discharge end defining a wiping seal in use adapted to allow discharge of the conveyed substance through the bushing at the discharge end of the conveying element of the predetermined dosages as aforesaid from the reservoir and to prevent the egress therefrom of any inadvertent additional substance affecting the accuracy of the dosages, a motor for driving the conveying element, and a means for programming the motor, the dosing apparatus being **characterized in that** the conveying element includes a sharp edge at the discharge end thereof.

2. A dosing apparatus according to claim 1,
wherein the reservoir is defined between two compartmentalizing walls each provided with a mounting zone for the respective bushing of said conveying element, each mounting zone accommodating adjustment means for the bushings of the conveying element whereby proper alignment thereof is maintained.

3. A dosing apparatus according to claim 2,
wherein the adjustment means for each bushing comprises a block accommodating the bushing, the block being provided with a pin engageable within a slot in the compartmentalizing wall and locking means for clamping the block in a desired location to the maintenance of alignment between the bushings.

4. A dosing apparatus according to claim 2,
wherein the conveying element is in the form of an auger provided with a scrolled flight having a pitch of predetermined dimension selected in accordance with the nature of the substance to be conveyed thereby, the flight being a close fit in the discharge end bushing to give a wiping seal at the discharge end of the conveying element.

5. A dosing apparatus according to claim 1,
wherein the driving motor is adapted for actuation in accordance with a predetermined and programmed dosing regime.

6. A dosing apparatus according to claim 1,
wherein the sharp edge is at least partially oriented towards the outlet.

7. A dosing apparatus according to claim 1,
wherein the sharp edge extends over at least a complete thread of the conveying element adjacent the bushing of the discharge end.

8. A dosing apparatus according to claim 7,
wherein the sharp edge extends between the bushings.

9. A dosing apparatus according to claim 1,
wherein the conveying element is a drill.
